# EUROPÄISCHE PATENTSCHRIFT

(11) **EP 2 254 730 B1**
(45) Veröffentlichungstag und Bekanntmachung des Hinweises auf die Patenterteilung: **04.01.2012**
(21) Anmeldenummer: 08873437.1
(22) Anmeldetag: 22.10.2008
(51) Int. Cl.: B23Q 3/155

(54) **WERKZEUG-MAGAZIN FÜR EINE WERKZEUG-MASCHINE MIT EINER SPREIZEINRICHTUNG AN EINER BELADE-STATION**
TOOL MAGAZINE FOR A MACHINE TOOL WITH AN EXPANSION DEVICE AT A LOADING STATION
MAGASIN À OUTILS POUR UNE MACHINE-OUTIL AVEC UN DISPOSITIF ÉCARTEUR SUR UNE STATION DE CHARGEMENT

(30) Priorität: 18.03.2008 DE 102008014779
(43) Veröffentlichungstag der Anmeldung: 01.12.2010
(73) Patentinhaber: MAG IAS GmbH, 73033 Göppingen (DE)
(72) Erfinder: KRISCHKE, Joachim, 74821 Mosbach (DE); HAAF, Steffen, 74743 Seckach (DE); RIEDEL, Thomas, 68526 Ladenburg (DE)
(74) Vertreter: Rau, Schneck & Hübner
(86) Internationale Anmeldenummer: PCT/EP2008/008907
(87) Internationale Veröffentlichungsnummer: WO 2009/115107

(56) Entgegenhaltungen:
- EP-A- 0 291 828
- EP-A- 1 260 754

## Beschreibung

Die Erfindung betrifft ein Werkzeug-Magazin mit Belade-Station nach dem Oberbegriff des Anspruches 1 und eine Werkzeug-Maschine nach dem Oberbegriff des Anspruches 7.

Derartige aus der EP 1 260 754 A2 bekannte Werkzeug-Maschinen und Werkzeug-Magazine mit Beladestation weisen eine Belade-Vorrichtung auf, die eine gabelförmige Halterung für den Schaft eines Werkzeugs aufweist. Diese wird an die Aufnahme-Klammer herangeführt und dann das Werkzeug unter elastischer Aufweitung der Haltearme in die Aufnahme-Klammer eingedrückt. Zur Entnahme eines Werkzeugs aus dem Werkzeug-Magazin wird dessen Schaft von der Klammer ergriffen und dann aus den Haltearmen herausgezogen. Diese Ausgestaltung ist verbesserungsbedürftig.

Aus der DE 35 31 160 A1 bekannte Werkzeug-Aufnahme-Klammern weisen Haltearme auf, die eine einseitig offene Ausnehmung begrenzen. Ein in einer solchen Werkzeug-Aufnahme-Klammer zu haltendes Werkzeug wird in die Ausnehmung geschoben, wobei die Haltearme den Schaft des Werkzeuges - nach dem vollständigen Einschieben des Schaftes in die Klammer - klemmend halten. Das Einschieben und insbesondere das Entnehmen erfordert einen hohen Kraftaufwand, der von Bedienungspersonen nicht erbracht werden kann.

Der Erfindung liegt daher die Aufgabe zugrunde, eine Werkzeug-Maschine der gattungsgemäßen Art und ein Werkzeug-Magazin der jeweils gattungsgemäßen Art so auszugestalten, dass das manuelle Einführen und Entnehmen eines Werkzeugs leicht möglich ist.

Diese Aufgabe wird für eine Werkzeug-Maschine durch die Merkmale im Kennzeichnungsteil des Anspruches 7 und für ein Werkzeug-Magazin mit Belade-Station durch die Merkmale im Kennzeichnungsteil des Anspruches 1 gelöst. Kern der Erfindung ist eine verhältnismäßig einfache Spreiz-Einrichtung, durch die die Haltearme der Klaue auseinandergedrückt werden, sodass eine Entnahme und gegebenenfalls auch ein Einführen des Schaftes eines Werkzeuges angenähert kräftefrei möglich ist. Dies ist besonders vorteilhaft einsetzbar, wenn eine Beschickung eines Werkzeug-Magazins von Hand erfolgt, das als Magazin-Rad oder Ketten-Magazin ausgestaltet sein kann.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispieles anhand der Zeichnung. Es zeigt:
- Fig. 1: eine Frontansicht einer Werkzeug-Maschine in Arbeits-Stellung;
- Fig. 2: eine Frontansicht der Werkzeug-Maschine in einer Werkzeug-Wechsel-Stellung;
- Fig. 3: eine Draufsicht auf die Werkzeug-Maschine in Werkzeug-Wechsel-Stellung zu Beginn eines Werkzeug-Wechsels;
- Fig. 4: eine Draufsicht auf die Werkzeug-Maschine in Werkzeug-Wechsel-Stellung während des Werkzeug-Wechsels;

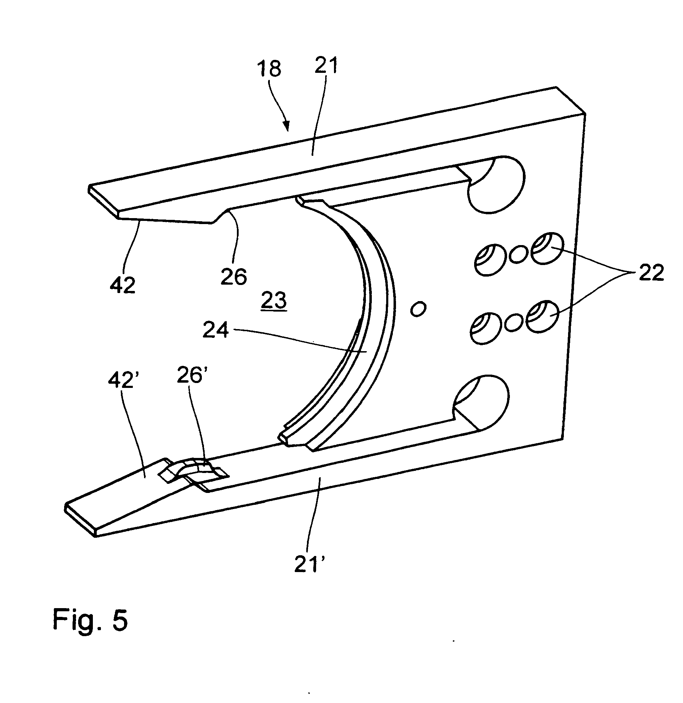

- Fig. 5: eine perspektivische Ansicht einer Werkzeug-Aufnahme-Klammer;

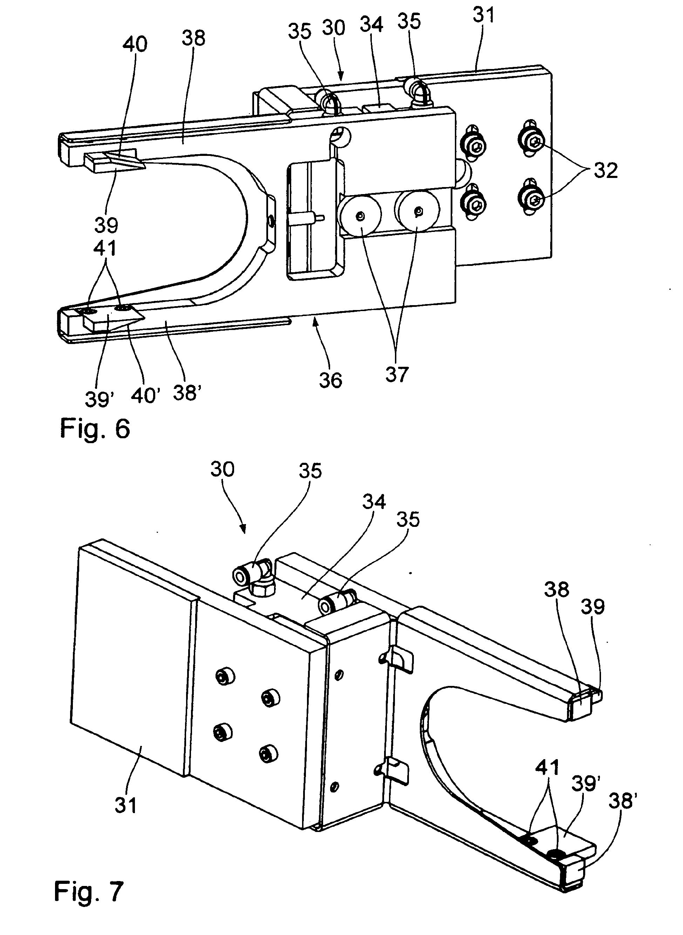

- Fig. 6: eine perspektivische Vorder-Ansicht einer Spreiz-Einrichtung für die Werkzeug-Aufnahme-Klammer;
- Fig. 7: eine perspektivische Rück-Ansicht der Spreiz-Einrichtung für die Werkzeug-Aufnahme-Klammer;
- Fig. 8: eine Werkzeug-Aufnahme-Klammer mit Spreiz-Einrichtung in schematischer Vorderansicht mit eingesetztem Werkzeug in geschlossenem Zustand; und
- Fig. 9: die Werkzeug-Aufnahme-Klammer nach Fig. 8 mit Spreiz-Einrichtung in geöffnetem Zustand.

Bei der in der Zeichnung dargestellten Werkzeug-Maschine handelt es sich um eine sogenannte Ständer-Maschine, die ein gegenüber dem Boden beziehungsweise einem Fundament 1 abgestütztes Maschinenbett 2 aufweist, auf dem ein vertikaler Ständer 3 in horizontaler x-Richtung auf x-Führungsschienen 4 verschiebbar geführt ist. Der Antrieb des Ständers 3 in x-Richtung erfolgt mittels eines x-Antriebsmotors 5, der am Maschinenbett 2 angebracht ist. Auf dem Ständer 3 ist ein y-Schlitten 6 in vertikaler y-Richtung auf y-Führungsschienen 7 verschiebbar geführt. Der Vertikal-Antrieb in y-Richtung erfolgt mittels eines y-Antriebsmotors 8, der am Ständer 3 angebracht ist. Der Ständer 3 mit dem y-Schlitten 6 ist also ein y-x-Schlitten. Auf dem y-Schlitten 6 ist eine Werkzeug-Spindel 9 angebracht, die sich in eine auf der x-Richtung oder y-Richtung senkrecht stehende horizontale z-Richtung erstreckt. An ihrem einem Arbeitsraum 10 zugewandten Ende weist sie eine Werkzeug-Aufnahme 11 zur Aufnahme eines Werkzeuges 12 auf.

Auf dem Maschinenbett 2 ist im Bereich des Arbeitsraums 10 ein auf z-Führungsschienen 14 in z-Richtung verschiebbarer Werkstück-Schlitten mittels eines z-Antriebsmotors 15 verschiebbar geführt, der am Maschinenbett 2 angebracht ist.

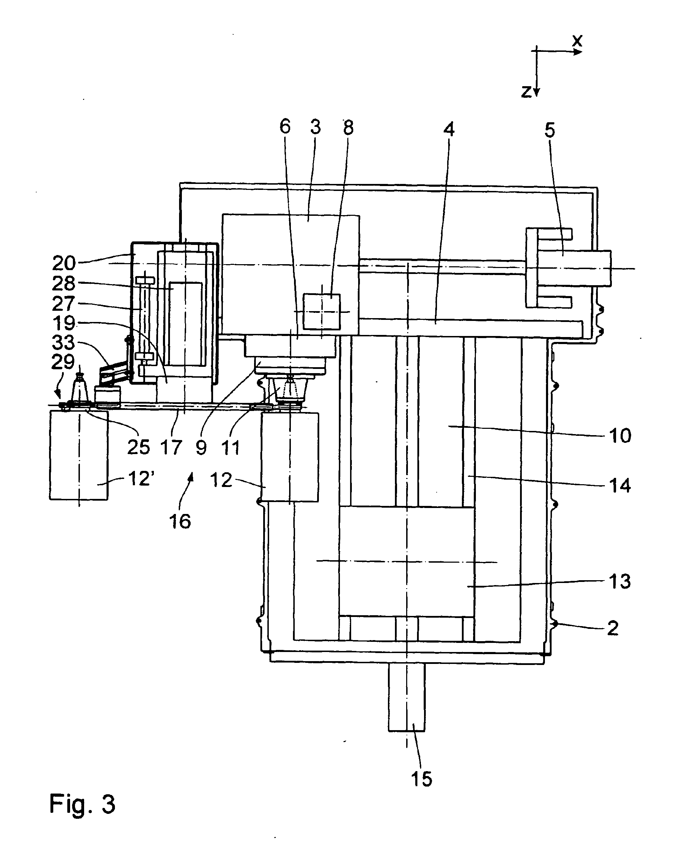

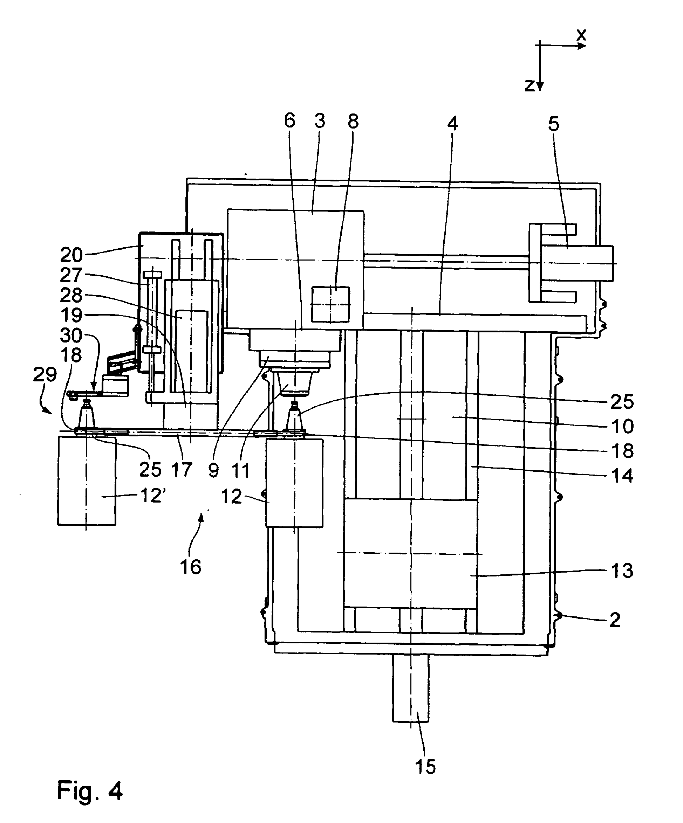

Seitlich am Maschinenbett 2, und zwar in x-Richtung etwa neben dem Ständer 3, ist ein Werkzeug-Magazin 16 angebracht, das ein Magazin-Rad 17 aufweist, auf dessen Umfang radial vorstehende Werkzeug-Aufnahme-Klammern 18 angebracht sind. Das Magazin-Rad 17 ist um eine in z-Richtung verlaufende Welle 19 in einem Lager- und Antriebs-Gehäuse 20 gelagert, das seitlich am Maschinenbett 2 angebracht ist. Das Magazin-Rad 17 ist zusammen mit der Welle 19 in z-Richtung zwischen zwei in den Fig. 3 und 4 dargestellten Positionen verschiebbar. Außerdem ist das Magazin-Rad 17 mit der Welle 19 drehbar.

Die Werkzeug-Aufnahme-Klammern 18 sind etwa U-förmig ausgebildet und weisen zwei zueinander parallele Haltearme 21, 21' auf, die hartelastisch sind, aber mit relativ großer Kraft aufeinander zu bzw. voneinander weg bewegt werden können. Die Werkzeug-Aufnahme-Klammern 18 sind mittels Schrauben, wozu lediglich die Bohrungen 22 dargestellt sind, am Magazin-Rad 17 befestigt, und zwar in der Weise, dass die Haltearme 21, 21' etwa radial vom Magazin-Rad 17 abstehen. Am Grund der durch die Haltearme 21, 21' begrenzten Ausnehmung 23 ist ein teilkreisförmiger Anlage-Bund 24, dessen Krümmung bzw. Radius dem entsprechenden Radius des Schaftes 25 eines Werkzeugs 12 bzw. 12' entspricht. An der Innenseite der Haltearme 21, 21', also zur Ausnehmung 23 hin gerichtet, sind zwei leicht in den Bereich der Ausnehmung 23 vorspringende Widerlager-Vorsprünge 26, 26' ausgebildet, die den Schaft 25 eines in die Aufnahme-Klammer 18 aufgenommenen Werkzeugs 12 bzw. 12' etwas umgreifen, so dass der Schaft 25 unter Anlage gegen den Anlage-Bund 24 fest in der Klammer 18 gehalten wird.

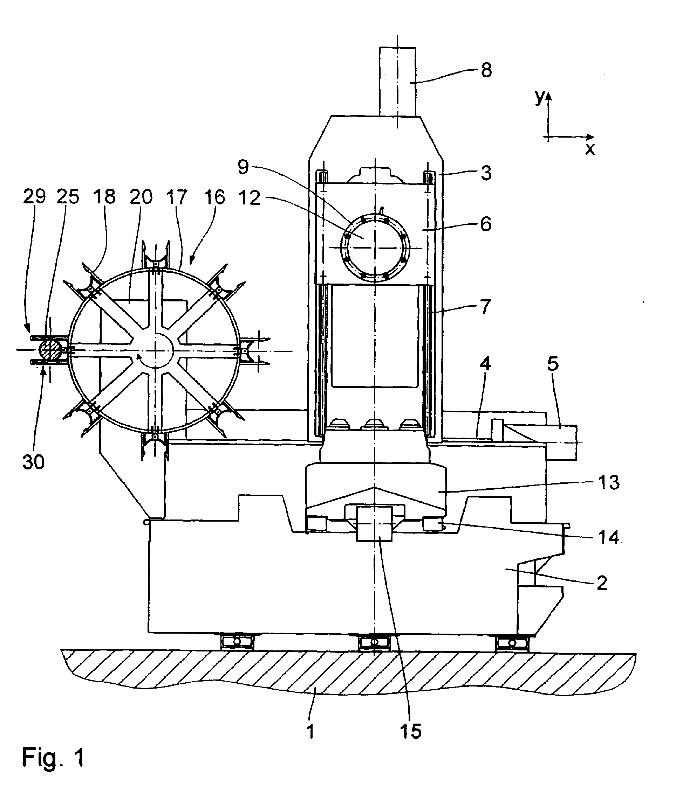

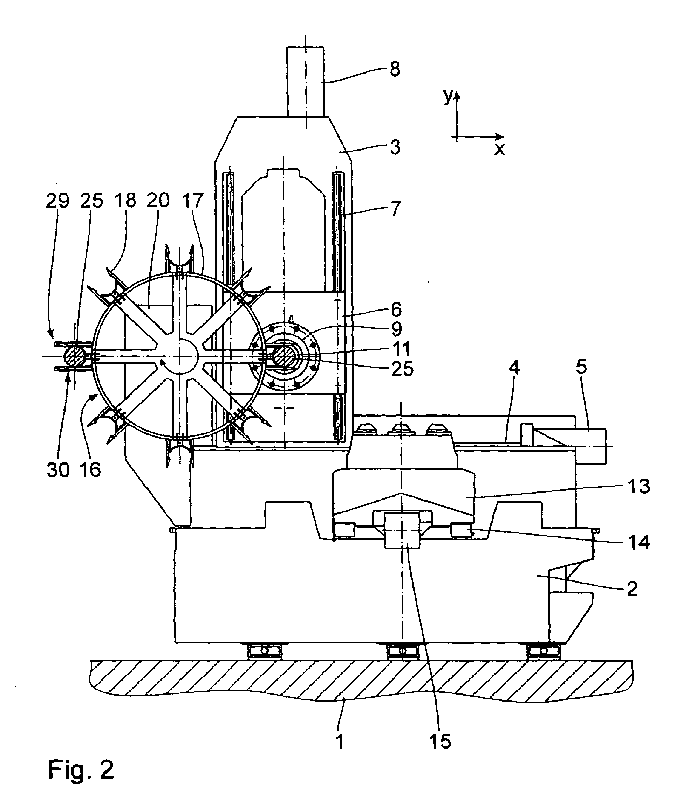

Die Arbeitsweise im Zusammenwirken von Werkzeug-Maschine und Werkstück-Magazin 16 ist wie folgt:
Ausgangspunkt ist entsprechend Fig. 1, dass in der Werkzeug-Aufnahme 11 der Spindel 9 ein Werkzeug 12 aufgenommen ist, mit dem ein auf dem Werkstück-Schlitten 13 befindliches, nicht dargestelltes Werkstück bearbeitet worden ist. Zur Entnahme dieses Werkzeugs 12 aus der Werkzeug-Aufnahme 11 verfährt der Ständer 3 aus der in Fig. 1 dargestellten Bearbeitungs-Position in die in Fig. 2 dargestellte Werkzeug-Wechsel-Position, also in x-Richtung zum Werkzeug-Magazin 16 hin. Das Magazin-Rad 17 befindet mit den an ihm angebrachten Werkzeug-Aufnahme-Klammern 18 in der in Fig. 3 dargestellten zum Lager- und Antriebs-Gehäuse 20 zurückgezogenen Position. Der y-Schlitten 6 ist in eine in Fig. 2 dargestellte Position verfahren, sodass beim Verfahren des Ständers 3 in x-Richtung zum Werkzeug-Magazin 16 hin das in der Werkzeug-Aufnahme 11 befindliche Werkzeug 12 in eine Werkzeug-Aufnahme-Klammer 18 eingeschoben wird. Beim Einschieben des Schaftes 25 zwischen die Haltearme 21, 21' und über die Widerlager-Vorsprünge 26, 26' werden die Haltearme 21, 21' aufgeweitet. Der Schaft 25 kommt zur Anlage gegen den Anlage-Bund 24. Die hartelastisch aufgeweiteten Haltearme 21, 21' entspannen sich wieder und die Widerlager-Vorsprünge 26, 26' legen sich um den Schaft 25, so dass das Werkzeug 12 bzw. 12' fest in der entsprechenden Werkzeug-Aufnahme-Klammer 18 gehalten wird. Anschließend wird ein Verschiebe-Antrieb 27 des Werkzeug-Magazins 16 betätigt und das Magazin-Rad 17 in z-Richtung in die in Fig. 4 dargestellte, vom Gehäuse 20 entfernte, Position verschoben. Hierdurch wird das Werkzeug 12 in z-Richtung aus der Werkzeug-Aufnahme 11 herausgezogen. Das Werkzeug ist nunmehr nur noch in der Werkzeug-Aufnahme-Klammer 18 des Magazin-Rades 17 gehalten.

Im Anschluss daran wird das Magazin-Rad 17 mittels eines Dreh-Antriebs 28 soweit verdreht, bis ein neues, in die Werkzeug-Aufnahme 11 einzusetzendes Werkzeug 12' sich vor der Werkzeug-Aufnahme 11 befindet. Der Verschiebe-Antrieb 27 wird in umgekehrter Richtung beaufschlagt, wodurch der Schaft 25 dieses Werkzeugs 12' in die Werkzeug-Aufnahme 11 eingeschoben und dort in der üblichen Weise verriegelt wird. Durch Verfahren des Ständers 3 in x-Richtung aus der in Fig. 2 dargestellten Werkzeug-Wechsel-Position in die in Fig. 1 dargestellte Arbeits-Position wird das Werkzeug 12' aus der Werkzeug-Aufnahme-Klammer 18 des Magazin-Rades 17 herausgezogen und kommt in seine Arbeitsposition. Die Ausgestaltung des Werkzeug-Magazins 16 und das Zusammenwirken mit der Werkzeug-Maschine sind - soweit es bisher beschrieben ist - in der Praxis verbreitet und allgemein bekannt.

Das Entnehmen und Beschicken des Magazin-Rades 17 mit Werkzeugen 12, 12' erfolgt sehr oft von Hand. Die Kräfte für ein manuelles Einschieben des Werkzeuges 12 bzw. 12' in die Werkzeug-Aufnahme-Klammer 18 sind sehr hoch, so dass ein manuelles Beschicken der einzelnen Werkzeug-Aufnahme-Klammern 18 mit Werkzeugen 12, 12' bzw. die manuelle Entnahme außerordentlich schwierig ist. Andererseits müssen die Haltearme 21, 21' sehr hartelastisch sein, um eine ausreichende feste Halterung der Werkzeuge 12, 12' sicherzustellen.

Um ein manuelles Beschicken und Entladen durchführen zu können, ist eine Belade-Station 29 vorgesehen, die der bisher geschilderten Position diametral gegenüberliegt, in der der Werkzeugwechsel zwischen Magazin-Rad 17 und Werkzeug-Maschine stattfindet. Die Belade-Station 29 ist mit einer Spreiz-Einrichtung 30 versehen. Diese weist eine Grundplatte 31 auf, die mittels Schrauben 32 an einem Tragarm 33 befestigt ist, der wiederum am Lager- und Antriebs-Gehäuse 20 des Werkzeug-Magazins 16 befestigt ist, wie den Fig. 3 und 4 entnehmbar ist. Auf der Grundplatte 31 ist ein Linear-Antrieb 34 befestigt, der als pneumatisch beaufschlagbarer Antrieb ausgebildet ist. Die Druckluftzu- und -abfuhr erfolgt über Druckluft-Anschlüsse 35. Am Linear-Antrieb 34 ist ein Schieber 36 angebracht, der auf Rollen 37 geführt ist und mittels des Antriebs 34 in Längsrichtung verschoben werden kann. Der Schieber 36 weist in ihrer Anordnung etwa den Haltearmen 21,21' entsprechende Betätigungs-Arme 38, 38' auf, an deren freien Enden Spreiz-Keile 39, 39' mit Spreiz-Flächen 40, 40' mittels Schrauben 41 angebracht sind. Die Spreiz-Keile 39, 39' stehen quer zur Längsrichtung der Betätigungsarme 38 von diesen ab, und zwar in Richtung zum Magazin-Rad 17.

An den Halte-Armen 21,21' sind Schräg-Flächen 42, 42' ausgebildet, die sich von den Widerlager-Vorsprüngen 26, 26' zum freien Ende der Haltearme 21, 21' hin erstrecken und sich zum freien Ende hin erweitern, so dass sich die Ausnehmung 23 nach außen hin erweitert.

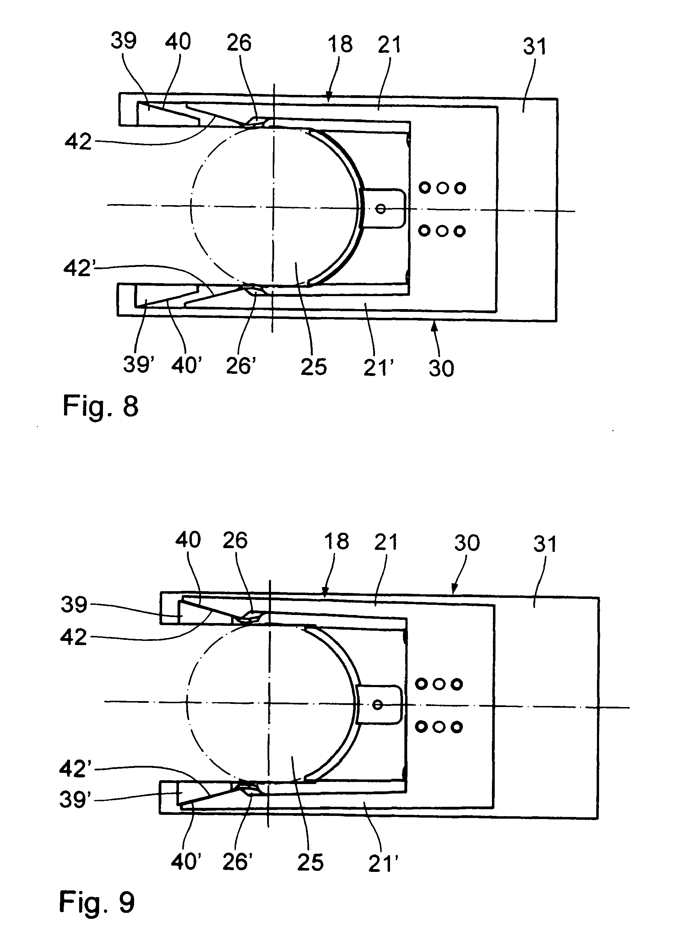

Zum Öffnen einer Werkzeug-Aufnahme-Klammer 18, d. h. zum manuellen Entnehmen eines Werkzeugs 12, 12' aus dem Werkzeug-Magazin 16 bzw. zum manuellen Einschieben eines Werkzeugs 12, 12' in das Werkzeug-Magazin 16, wird das Magazin-Rad 17 mittels des Dreh-Antriebs 28 in die Belade-Station 29 gedreht. Bei dieser Drehbewegung befindet sich das Magazin-Rad 17 in der in Fig. 4 dargestellten herausgeschobenen Position. Es wird dann mittels des Verschiebe-Antriebs 27 in die in Fig. 3 dargestellte zurückgezogene Position gebracht, wodurch der Schaft 25 durch den Schieber 36, also zwischen den Betätigungsarmen 38, 38' hindurch geschoben wird. Der Schieber 36 kommt zur flächigen Anlage an der Werkzeug-Aufnahme-Klammer 18. Die Spreiz-Keile 39, 39' kommen hierbei mit ihren Spreiz-Flächen 40, 40' in die in Fig. 8 dargestellte Position, in der noch ein Spalt zwischen den Spreiz-Flächen 40, 40' und den Schräg-Flächen 42, 42' ist. Durch Verschieben des Schiebers 36 mittels des Linear-Antriebs 34 aus der in Fig. 8 dargestellten Position in die in Fig. 9 dargestellte Position kommen die Spreiz-Keile 39, 39' mit ihren Spreiz-Flächen 40, 40' zur Anlage an den Schräg-Flächen 42, 42' und spreizen die Haltearme 21, 21' so weit auseinander, bis der Schaft 25 des Werkzeugs 12 bzw. 12' von den Widerlager-Vorsprüngen 26, 26' freikommt und nach außen herausgenommen werden kann. Nach dem Einsetzen eines neuen Werkzeugs 12, 12' wird der Linear-Antrieb 34 wieder in umgekehrter Richtung betätigt, so dass die Spreiz-Keile 39, 39' die Haltearme 21,21' freigeben. Diese entspannen sich wieder aufeinander zu. Das Magazin-Rad 17 wird wieder in die in Fig. 4 dargestellte Position verfahren, wodurch die Spreiz-Keile 39, 39' außer Eingriff mit den Haltearmen 21,21' gebracht werden.

## Patentansprüche

1. Werkzeug-Magazin (16) mit Belade-Station (29) für eine Werkzeug-Maschine,
wobei das Werkzeug-Magazin (16) mehrere Werkzeug-Aufnahme-Klammern (18) aufweist, die jeweils elastisch aufweitbare Haltearme (21, 21') zur Aufnahme und Halterung eines Schaftes (25) eines Werkzeugs (12, 12') aufweisen, und
wobei an einer Belade-Station (29) eine Spreiz-Einrichtung (30) zum Vergrößern des Abstandes der Haltearme (21, 21') vorgesehen ist,
**dadurch gekennzeichnet,**
**dass** die Spreiz-Einrichtung (30) Spreiz-Flächen (40, 40') aufweist, die bei einer Verschiebung gegen an den Haltearmen (21, 21') ausgebildete Schräg-Flächen (42, 42') unter Vergrößern des Abstands der Haltearme (21, 21') voneinander zur Anlage kommen.

2. Werkzeug-Magazin nach Anspruch 1, **dadurch gekennzeichnet, dass** die Spreiz-Einrichtung (30) einen Schieber (36) aufweist, an dem die Spreiz-Flächen (40, 40') ausgebildet sind.

3. Werkzeug-Magazin nach Anspruch 2, **dadurch gekennzeichnet, dass** die Spreiz-Flächen (40, 40') an Spreiz-Keilen (39, 39') ausgebildet sind, die mit den Schräg-Flächen (42, 42') in Überdeckung bring-5 bar sind.

4. Werkzeug-Magazin nach Anspruch 2, **dadurch gekennzeichnet, dass** die Spreiz-Einrichtung (30) mit einem Linear-Antrieb (34) versehen ist, der mit dem Schieber (36) verbunden ist.

5. Werkzeug-Magazin nach Anspruch 1, **dadurch gekennzeichnet, dass** die Haltearme (21, 21') mit aufeinander zu gerichteten Widerlager-Vorsprüngen (26) versehen sind.

6. Werkzeug-Magazin nach Anspruch 1, **dadurch gekennzeichnet, dass** die Spreiz-Einrichtung (30) und das Werkzeug-Magazin (16) aufeinander zu und voneinander weg bewegbar sind.

7. Werkzeug-Maschine mit
- einer Werkzeug-Aufnahme (11), die relativ zu einem Werkzeug-Magazin (16) verschiebbar ist, und
- einem Werkzeug-Magazin (16) nach Anspruch 1.

8. Werkzeug-Maschine nach Anspruch 7, **dadurch gekennzeichnet, dass** die Spreiz-Einrichtung (30) einen Schieber (36) aufweist, an dem die Spreiz-Flächen (40, 40') ausgebildet sind.

9. Werkzeug-Maschine nach Anspruch 8, **dadurch gekennzeichnet, dass** die Spreiz-Flächen (40, 40') an Spreiz-Keilen (39, 39') ausgebildet sind, die mit den Schräg-Flächen (42, 42') in Überdeckung bringbar sind.

10. Werkzeug-Maschine nach Anspruch 8, **dadurch gekennzeichnet, dass** die Spreiz-Einrichtung (30) mit einem Linear-Antrieb (34) versehen ist, der mit dem Schieber (36) verbunden ist.

11. Werkzeug-Maschine nach Anspruch 7, **dadurch gekennzeichnet, dass** die Haltearme (21, 21') mit aufeinander zu gerichteten Widerlager-Vorsprüngen (26) versehen sind.

12. Werkzeug-Maschine nach Anspruch 7, **dadurch gekennzeichnet, dass** die Spreiz-Einrichtung (30) und das Werkzeug-Magazin (16) aufeinander zu und voneinander weg bewegbar sind.

## Claims

1. Tool magazine (16) with a loading station (29) for a machine tool, wherein the tool magazine (16) comprises several tool mounting clamps (18), which comprise respectively elastically expandable holding arms (21, 21') for mounting and holding a shaft (25) of a tool (12, 12') and
wherein at a loading station (29) a spreading device (30) is provided for increasing the spacing of the holding arms (21, 21'),
**characterised in that** the spreading device (30) comprises spreading surfaces (40,40'), which during displacement come to bear against oblique surfaces (42, 42') formed on the holding arms (21, 21') by increasing the spacing of the holding arms (21 21') from one another.

2. Tool magazine according to claim 1, **characterised in that** the spreading device (30) comprises a slide (36), on which the spreading surfaces (40, 40') are formed.

3. Tool magazine according to claim 2, **characterised in that** the spreading surfaces (40, 40') are formed on spreading wedges (39, 39'), which can be moved to overlap with the oblique surfaces (42, 42').

4. Tool magazine according to claim 2, **characterised in that** the spreading device (30) is provided with a linear drive (34) which is connected to the slide (36).

5. Tool magazine according to claim 1, **characterised in that** the holding arms (21, 21') are provided with abutment projections (26) which point towards one another.

6. Tool magazine according to claim 1, **characterised in that** the spreading device (30) and the tool magazine (16) can be moved towards one another and away from one another.

7. Machine tool comprising
- a tool mount (11) which can be displaced relative to a tool magazine (16) and
- a tool magazine (16) according to claim 1.

8. Machine tool according to claim 7, **characterised in that** the spreading device (30) comprises a slide (36) on which the spreading surfaces (40, 40') are formed.

9. Machine tool according to claim 8, **characterised in that** the spreading surfaces (40, 40') are formed on spreading wedges (39, 39'), which can be moved to overlap with the oblique surfaces (42, 42').

10. Machine tool according to claim 8, **characterised in that** the spreading device (30) is provided with a linear drive (34), which is connected to the slide (36).

11. Machine tool according to claim 7, **characterised in that** the holding arms (21, 21') are provided with abutment projections (26) which point towards one another.

12. Machine tool according to claim 7, **characterised in that** the spreading device (30) and the tool magazine (16) can be moved towards one another and away from one another.

## Revendications

1. Magasin à outils (16) avec une station de chargement (29) pour une machine outil,
le magasin à outils présentant plusieurs pinces de fixation d'outil (18) qui chacune présente des bras de maintien pouvant s'écarter de manière élastique (21, 21') pour la réception et la fixation d'un axe (25) d'un outil (12, 12'), et
où un dispositif d'écartement (30) pour l'agrandissement de la distance entre les bras de maintien (21, 21') est prévu sur la station de chargement (29),
**caractérisé en ce**
**que** le dispositif d'écartement (30) présente des surfaces d'écartement (40, 40') qui viennent s'appuyer sur des surfaces de forme biaisée (42, 42'), façonnées sur les bras de maintien (21, 21'), lors d'un déplacement lorsque la distance entre les bras de maintien (21, 21') s'agrandit.

2. Magasin à outils selon la revendication 1
**caractérisé en ce**
**que** le dispositif d'écartement (30) présente un poussoir (36) sur lequel sont façonnées les surfaces d'écartement (40, 40').

3. Magasin à outils selon la revendication 2
**caractérisé en ce**
**que** les surfaces d'écartement (40, 40') sont façonnées sur des cales d'écartement (39, 39') qui peuvent être ramenées pour le recouvrement des surfaces biaisées (42, 42').

4. Magasin à outils selon la revendication 2
**caractérisé en ce**
**que** le dispositif d'écartement (30) est muni d'un entraînement linéaire (34) qui est relié au poussoir (36).

5. Magasin à outils selon la revendication 1
**caractérisé en ce**
**que** les bras de maintien (21, 21') sont munis de saillies en butée (26) disposées les unes au dessus des autres.

6. Magasin à outils selon la revendication 1
**caractérisée en ce**
**que** le dispositif d'écartement (30) et le magasin à outils (16) peuvent être déplacés l'un au dessus de l'autre et éloignés l'un de l'autre.

7. Machine-outil comprenant
- une fixation d'outils (11) qui peut être déplacée par rapport au magasin d'outils (16) et
- un magasin d'outils (16)
selon la revendication 1.

8. Machine-outil selon la revendication 7
**caractérisée en ce**
**que** le dispositif d'écartement (30) présente un poussoir (36) sur lequel sont façonnées des surfaces d'écartement (40, 40').

9. Machine-outil selon la revendication 8
**caractérisée en ce**
**que** les surfaces d'écartement (40, 40') sont façonnées sur des cales d'écartement (39, 39') qui peuvent être ramenées pour le recouvrement sur les surfaces biaisées (42, 42').

10. Machine-outil selon la revendication 8
**caractérisée en ce**
**que** le dispositif d'écartement (30) est muni d'un entraînement linéaire (34) qui est relié au poussoir (36).

11. Machine-outil selon la revendication 7
**caractérisée en ce**
**que** les bras de maintien (21, 21') sont munis de saillies en butée (26) disposées les unes au dessus des autres.

12. Machine-outil selon la revendication 7
**caractérisée en ce**
**que** le dispositif d'écartement (30) et le magasin d'outils (16) peuvent être déplacés l'un au dessus de l'autre et éloignés l'un de l'autre.
